Europäisches Patentamt

European Patent Office

Office européen des brevets

(11) Veröffentlichungsnummer: **0 107 776**
A2

# (12) EUROPÄISCHE PATENTANMELDUNG

(21) Anmeldenummer: 83109228.3

(22) Anmeldetag: 17.09.83

(51) Int. Cl.³: **B 23 Q 1/02**
B 23 Q 5/26

(30) Priorität: 02.10.82 DE 3236565

(43) Veröffentlichungstag der Anmeldung:
09.05.84 Patentblatt 84/19

(84) Benannte Vertragsstaaten:
CH DE FR IT LI

(71) Anmelder: ROBERT BOSCH GMBH
Postfach 50
D-7000 Stuttgart 1(DE)

(72) Erfinder: Kettner, Andreas
Zorndorferstrasse 8
D-7000 Stuttgart 31(DE)

(72) Erfinder: Leisner, Ernst, Dipl.-Ing.
Wettertalstrasse 4
D-7257 Ditzingen(DE)

(72) Erfinder: Maier, Gernot, Ing., grad.
Im Geiger 81
D-7000 Stuttgart 50(DE)

(72) Erfinder: Seng, Rolf
Am Ring 32
D-7148 Remseck 1 a.N.(DE)

(72) Erfinder: Rösch, Arne, Dipl.-Ing.
Schulstrasse 1
D-8961 Haldenwang(DE)

(54) Einrichtung zum Längsverschieben von Handhabungseinheiten der industriellen Fertigung.

(57) Einrichtung zum Längsverschieben von Handhabungseinheiten der industriellen Fertigung, mit einem Schlitten (20), der auf einem feststehenden Support (10) verschiebbar gelagert ist. Der Support (10) ist durch ein Strangpreßprofil gebildet, das eine Mittenbohrung (30) hat, deren Durchmesser dem Zylinderdurchmesser eines Druckmittelantriebs für den Schlitten (20) entspricht. Dadurch kann der Support (10) sowohl für Einrichtungen mit einem Druckmittelantrieb als auch für Einrichtungen mit einem elektrischen Antrieb des Schlittens (20) verwendet werden. Beim Druckmittelantrieb ist der Zylinder (30) geschützt im Support (10) integriert. Der im Zylinder (30) bewegliche Kolben (44) ist vorteilhaft über einen Bandzug (54) mit dem Schlitten (20) verbunden, wodurch sich eine kompakte Ausführung ergibt. Die Einheit hat eine hohe Flexibilität bezüglich der Herstellung unterschiedlicher Hublängen.

Fig. 1

0107776

R. 18094
13.9.1982 Ki/Jä

ROBERT BOSCH GMBH, 7000 STUTTGART 1

Einrichtung zum Längsverschieben
von Handhabungseinheiten der industriellen Fertigung

Stand der Technik

Die Erfindung bezieht sich auf eine Einrichtung nach
der Gattung des Hauptanspruchs. Bei den bekannten Einrichtungen dieser Gattung ist der Support als Schweißkonstruktion ausgeführt. Diese Ausführung ist für kleinere
Einrichtungen verhältnismäßig aufwendig und auch deswegen
nachteilig, weil für verschiedene Antriebsarten des
Schlittens auch unterschiedliche Schweißkonstruktionen
benötigt werden, wodurch sich bei einer Serienfertigung
und bei Typenvielfalt die Lagerhaltung erheblich verteuert.

Bei Einrichtungen zum Transportieren von Werkstücken
(GB-PS 1 192 249) ist es bekannt, zwei endlose Trans-...
portbänder im Abstand parallel zueinander anzuordnen und
deren rücklaufende Stränge durch Zylinder hindurchzuführen,
in denen druckmittelbeaufschlagte Kolben angeordnet sind.
Auch bei diesen Einrichtungen ist das tragende Gestell aus
einzelnen Teilen zusammengeschraubt oder -geschweißt.

...

- 2 -

Vorteile der Erfindung

Die erfindungsgemäße Anordnung mit den kennzeichnenden
Merkmalen des Hauptanspruchs hat demgegenüber den Vorteil, daß sowohl für eine Ausführung mit Druckmittelantrieb als auch für eine Ausführung mit elektrischem
Antrieb ein und dasselbe Strangpreßprofil verwendbar
ist, so daß sich bei Fertigung von Typreihen eine erhebliche Vereinfachung der Lagerhaltung ergibt. Im
Fall eines Druckmittelantriebs ist außerdem der Antriebszylinder in den Support integriert. Das Strangpreßprofil zeichnet sich durch eine hohe Biege- und Torsionsfestigkeit aus. Gerade durch die Integrierung des Zylinderrohres im Strangpreßprofil werden hohe Trägheitsmomente erreicht.

Durch die in den Unteransprüchen aufgeführten Maßnahmen
sind vorteilhafte Weiterbildungen der im Hauptanspruch
angegebenen Anordnung möglich.

Besonders vorteilhaft ist es, wenn für den Antrieb des
Schlittens ein Kolben in der als Zylinderbohrung ausgebildeten Mittenbohrung des Strangpreßprofils und ein den
Kolben mit dem Schlitten verbindendes flexibles Zugelement vorgesehen ist, welches über Umlenkköpfe geführt
ist, die an beiden Enden der Mittenbohrung an das Strangpreßprofil angesetzt sind und die Mittenbohrung abdichten.
Als Zugelement kann vorteilhaft ein Bandzug dienen, dessen
abgedichtete Herausführung aus dem Zylinder keine Probleme
aufwirft. Durch diese Anordnung ergibt sich eine besonders
kompakte Ausführung, welche auch in den beiden Endlagen
des Schlittens keine über die beiden Umlenkköpfe an den
Stirnseiten des Supports ausladenden Antriebsteile hat.
Bei Verwendung eines Bandzuges oder dgl. kann ferner die

. . .

Zylinderbohrung im Strangpreßprofil von einer geschlossenen Mantelwandung umgeben sein, so daß die Festigkeit des Strangpreßprofils durch die Zylinderbohrung praktisch überhaupt nicht beeinträchtigt ist.

Bei Ausführungen mit Druckmittelantrieb ergibt sich eine montage- und wartungsfreundliche Ausführung, wenn in das Strangpreßprofil in die Mitten- bzw. Zylinderbohrung führende Leitungen zum Zu- und Abführen des Druckmittels integriert sind.

Die Führungsleisten für den Schlitten können entweder unmittelbar an das Strangpreßprofil angeformt oder durch zusätzliche Anbauteile gebildet sein. Eine leichte und dennoch verschleißfeste Ausführung ergibt sich, wenn das Strangpreßprofil aus Aluminium oder einer Aluminium-Legierung besteht und die Führungsleisten als gesonderte, verschleißfeste Teile ausgebildet sind, welche am Strangpreßprofil befestigt sind.

Anstelle einer Gleitführung kann auch eine Kugel- oder Rollenführung des Schlittens vorgesehen werden.

Für die Verwendung des Supports in Einrichtungen mit elektromotorischem Antrieb des Schlittens ist es vorteilhaft, wenn das Strangpreßprofil mit Mitteln zum Befestigen einer Zahnstange versehen ist. Als Zahnstange kann zweckmäßig eine der Führungsleisten für den Schlitten ausgebildet sein.

Das Strangpreßprofil kann vorteilhaft mit seitlichen T-Nuten versehen sein, so daß es ohne zusätzliche Bohrarbeiten mit anderen Teilen verbunden werden kann.

...

Zeichnung

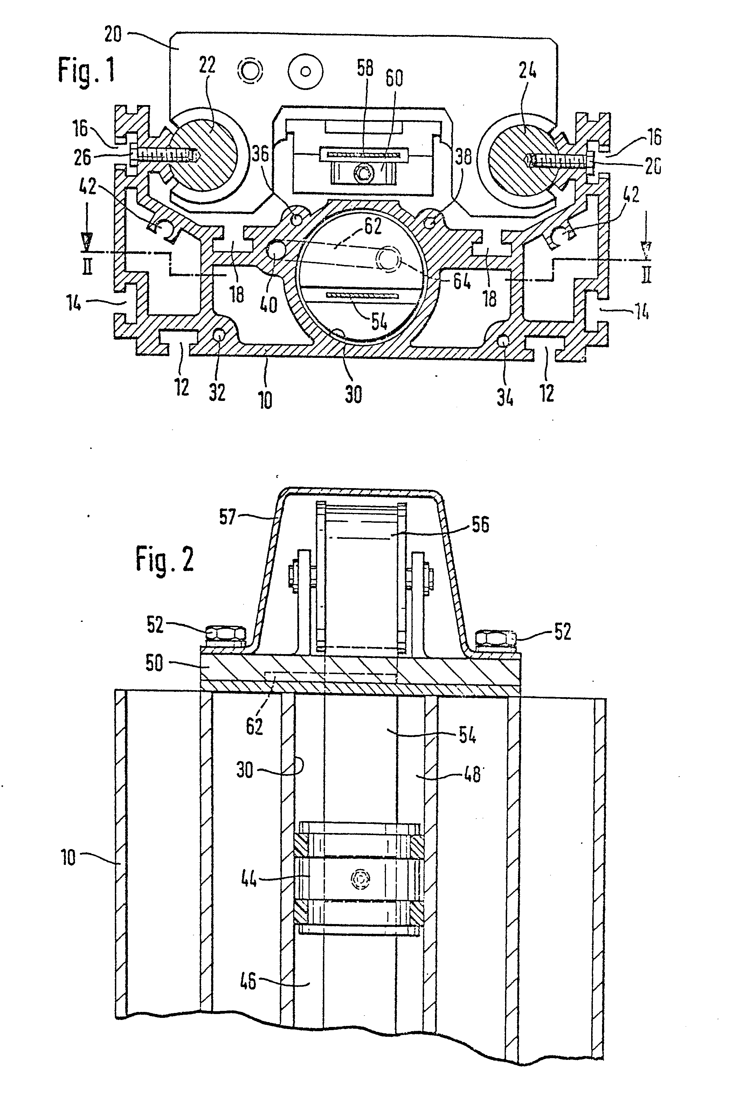

Ein Ausführungsbeispiel der Erfindung ist in der Zeichnung vereinfacht dargestellt und in der nachfolgenden
Beschreibung erläutert. Es zeigen Figur 1 einen Querschnitt durch das Ausführungsbeispiel und Figur 2 einen
Schnitt nach der Linie II-II in Figur 1.

Beschreibung des Ausführungsbeispiels

Die Einrichtung hat als tragenden Grundkörper ein Strangprofil 10, das mit seitlichen Längsnuten 12, 14, 16, 18
zum Befestigen weiterer Teile bzw. zur eigenen Verankerung an einem größeren Bauelement versehen ist. Das
Strangpreßprofil 10 dient als Support und Führung für
einen Schlitten 20, auf welchem weitere Handhabungseinheiten befestigbar sind.

Der Schlitten 20 ist auf zwei Stangen 22 und 24 getragen und verschiebbar geführt, die durch Schrauben
26 am Strangpreßprofil 10 befestigt sind. Die Stangen
22 und 24 sind aus Stahl, wogegen das Strangpreßprofil
10 aus Aluminium oder aus einer Aluminium-Legierung
besteht. Dadurch ergibt sich eine leichte Bauweise,
die dennoch verschleißfest ist bzw. deren dem Verschleiß unterliegenden Führungselemente leicht auswechselbar sind.

Das Strangpreßprofil 10 ist zwischen den Stangen 22, 24
mit einer Mittenbohrung 30 versehen, welche im vorliegenden Fall als Zylinderbohrung für einen Druckmittelantrieb
des Schlittens 20 dient. Ferner ist das Strangpreßprofil
10 mit Längsbohrungen 32 bis 42 versehen, deren Zweck
nachfolgend noch näher beschrieben ist.

...

- 5 -

In der Zylinderbohrung 30 ist ein Kolben 44 verschiebbar,
welcher die Zylinderbohrung 30 in zwei Kammern 46 und 48
teilt. Eine jede Kammer 46, 48 ist nach außen mit einem
Flansch 50 dicht verschlossen. Jeder Flansch 50 ist
an der entsprechenden Stirnseite des Strangpreßprofils
10 durch vier Schrauben 52 befestigt, welche in die nachträglich mit einem Gewinde versehenen Endabschnitte der
Bohrungen 32 bis 38 eingeschraubt sind.

Der Kolben 44 ist mit dem Schlitten 20 durch einen Bandzug 54 verbunden, welcher durch die Zylinderbohrung 30
hindurchführt, am Kolben 44 befestigt ist und abgedichtet
durch die Flansche 50 nach außen tritt. Dort ist der
Bandzug 54 über Rollen 56 geführt und um 180° umgelenkt. Die Rollen 56 sind an den Flanschen 50 drehbar gelagert und durch Hauben 57 nach außen abgedeckt. Die beiden Enden 58 (Figur 1) des Bandzuges
54 sind über ein Spannschloß 60 gegeneinander gespannt und am Schlitten 20 befestigt. Der Bandzug
54 überträgt so die Linearbewegungen des Kolbens 44
auf den Schlitten 20.

Die beiden Kammern 46 und 48 in der Zylinderbohrung
30 werden durch eine nichtdargestellte Steuereinrichtung abwechselnd mit einer Druckluftquelle und
mit der Außenluft verbunden. Die Steuereinrichtung
kann zweckmäßig in den in der Zeichnung nicht sichtbaren Flansch 50 integriert sein. Die Kammer 46 kann
dann über eine Bohrung in diesem Flansch direkt mit
einer Steuerkammer verbunden sein, während die Kammer
48 über einen Querkanal 62 im dargestellten Flansch
50 und die Längsbohrung 40 im Strangpreßprofil 10
mit der Steuerkammer verbindbar ist.

...

- 6 -

Der dargestellte Flansch 50 trägt ein in die Kammer 48
hineinragendes Rohr 64, welches mit dem Querkanal 62
in Verbindung steht und das Druckmittel in die Kammer
48 leitet. Das Rohr 64 ist in axialer Richtung federnd
zusammendrückbar ausgebildet und dient zur Dämpfung
des Kolbens 44, wenn dieser in seine Endlage einläuft.

Die Längsnuten 18 bieten sich an für die Aufnahme von
Schrauben zum Befestigen einer Zahnstange, wenn anstelle
des Druckmittelantriebs ein elektrischer Antrieb vorgesehen ist, dessen Motor am Schlitten 20 sitzt. Die
Zahnstange könnte aber auch direkt in eine der beiden
zum Tragen und Führen des Schlittens 20 vorgesehenen
Stangen 22, 24 integriert sein.

R.18094
13.9.1982 Ki/Jä

ROBERT BOSCH GMBH, 7000 STUTTGART 1

Ansprüche

1. Einrichtung zum Längsverschieben von Handhabungseinheiten der industriellen Fertigung, mit einem
feststehenden Support, der mit mindestens zwei im
Abstand parallel zueinanderlaufenden Führungsleisten für einen beweglichen Schlitten und mit
Mitteln für den Antrieb des Schlittens versehen ist,
dadurch gekennzeichnet, daß der Support (10) aus
einem Strangpreßprofil gebildet ist, in welches zwischen den seitlichen Führungsleisten (22, 24) liegend
eine Mittenbohrung (30) integriert ist, deren Durchmesser dem Zylinderdurchmesser eines Druckmittelantriebs für den Schlitten (20) entspricht.

2. Einrichtung nach Anspruch 1, dadurch gekennzeichnet,
daß für den Antrieb des Schlittens (20) eine Kolben
(44) in der als Zylinderbohrung ausgebildeten Mittenbohrung (30) des Strangpreßprofils (10) und ein den
Kolben (40) mit dem Schlitten (20) verbindendes
flexibles Zugelement (54), insbesondere ein Bandzug,
vorgesehen ist, welches über Umlenkköpfe (50, 56) geführt ist, die an beiden Enden der Mittenbohrung (30)
an das Strangpreßprofil (10) angesetzt sind und die

...

Mittenbohrung (30) abdichten.

3. Einrichtung nach Anspruch 1 oder 2, dadurch gekennzeichnet, daß in das Strangpreßprofil (10) in die
Mittenbohrung (30) führende Leitungen (40) zum Zu-
und Abführen eines Druckmittels integriert sind.

4. Einrichtung nach einem der vorhergehenden Ansprüche,
dadurch gekennzeichnet, daß das Strangpreßprofil (10)
aus Aluminium oder einer Aluminium-Legierung besteht
und die Führungsleisten (22, 24) für den Schlitten (20)
als gesonderte, verschleißfeste Teile am Strangpreßprofil (10) befestigt sind.

5. Einrichtung nach einem der vorhergehenden Ansprüche,
dadurch gekennzeichnet, daß das Strangpreßprofil (10)
mit Mitteln zum Befestigen einer Zahnstange versehen
ist.

18094

0107776

Fig. 1

Fig. 2